# EUROPÄISCHE PATENTANMELDUNG

(11) **EP 1 512 947 A2**
(43) Veröffentlichungstag der Anmeldung: **09.03.2005**
(21) Anmeldenummer: 04020528.8
(22) Anmeldetag: 30.08.2004
(51) Int. Cl.: G01D 5/249

(54) **Messsystem zur Bestimmung der absoluten Position von entlang einer Schiene bewegenden Elementen**

(30) Priorität: 04.09.2003 DE 10341297
(71) Anmelder: DORMA GmbH + Co. KG, 58256 Ennepetal (DE)
(72) Erfinder: Hoopmann, Harald, 26655 Westerstede-Ochholt (DE)

(57) **Zusammenfassung**

Die Erfindung betrifft ein Messsystem zur Bestimmung einer absoluten Position eines sich entlang einer Schiene bewegenden Elementes einer Horizontalschiebewand. Es ist ein sich in oder an der Schiene befindliches Codeband vorgesehen, das über ein in oder an dem Element angeordnetes optisches Abtastsystem abgetastet wird. Ein Decoder bestimmt auf Grundlage eines von dem optischen Abtastsystem ausgegebenen Signales eine absolute Position des Elementes.

## Beschreibung

Die Erfindung betrifft ein Messsystem zur Bestimmung einer absoluten Position eines sich entlang einer Schiene bewegenden Elementes, eine Horizontalschiebewand mit mehreren sich entlang einer Schiene bewegenden Elementen sowie ein Element für eine Horizontalschiebewand mit mehreren sich entlang einer Schiene bewegenden Elementen.

Es gibt Positions-Messsysteme auf dem Markt, welche fast alle nach dem gleichen Prinzip arbeiten, dass innerhalb eines Sensors Umdrehungen auf einer Codierscheibe oder Striche von einem Codeband abgetastet und über eine Recheneinheit auf die Position umgeformt werden. Hierbei wird allgemein ein von einem Nullpunkt gefahrener Weg anhand einer von dem Sensor abgegebenen Anzahl von Pulsen ermittelt, wodurch die Position aus dem Nullpunkt und dem zurückgelegten Weg, d. h. relativ zu dem Nullpunkt, bestimmt werden kann. Bei diesem Verfahren ist jedoch nachteilig, dass die Anzahl der Pulse entweder nicht flüchtig zwischengespeichert werden muss oder die Position mit einem Stromausfall verloren geht, wodurch das Element für eine neue Positionierung erst wieder in den Nullpunkt gefahren werden müsste. Dies ist inbesondere bei Systemen, bei denen sich mehrere Elemente auf der gleichen Strecke befinden, wie z. B. bei einer Horizontalschiebewand, nicht wünschenswert. Weiter weist ein solches Messsystem in Systemen mit mehreren sich entlang einer Schiene bewegenden Elementen den Nachteil auf, dass es aufgrund von Toleranzen bei den einzelnen in den jeweiligen Elementen verwendeten Inkrementalgebern fehleranfällig ist.

Es ist daher Aufgabe der vorliegenden Erfindung, ein Messsystem zur Bestimmung einer absoluten Position eines sich entlang einer Schiene bewegenden Elementes zu schaffen, bei dem die zuvor beschriebenen Nachteile nicht auftreten.

Diese Aufgabe wird durch ein Messsystem mit den im Patentanspruch 1 angegebenen Merkmalen gelöst. Eine Horizontalschiebewand mit einem solchen Messsystem ist im Patentanspruch 13 definiert und ein Element für eine Horizontalschiebewand mit den Merkmalen eines solchen Messsystemes ist im Patentanspruch 14 definiert. Vorteilhafte Ausgestaltungen des Messsystemes ergeben sich aus den Unteransprüchen 2 bis 12.

Das erfindungsgemäße Messsystem ist demnach mit einem sich in oder an einer Schiene befindlichen Codeband, das eine absolute Position anzeigt, einem in oder an dem Element angeordneten optischen Abtastsystem, welches das Codeband abtastet, und einem Decoder ausgestattet, der auf Grundlage eines von dem optischen Abtastsystem ausgegebenen Signales eine absolute Position des Elementes bestimmt. Hierdurch wird eine besondere Flexibilität eines jeweils zu verfahrenden Elementes, z. B. eines Elementes einer Horizontalschiebewand, geschaffen, da jede Stellung eines einzelnen Elementes jederzeit angefahren werden kann, ohne eine Nullpunkt-Indizierung vornehmen zu müssen oder neben dem Messsystem andere mechanische Hilfsmittel vorzusehen. Dies wird insbesondere dadurch erreicht, dass das Codeband nicht lediglich Striche in einem bestimmten Abstand aufweist, die bei dem Verfahren des Elementes zu von dem Sensor abgegebenen Pulsen führen, sondern eine absolute Position anzeigt, die auch nach einem Stromausfall direkt abgelesen und ausgewertet werden kann.

Erfindungsgemäß ist der Decoder vorzugsweise in oder an dem Element angeordnet. Diese zu der alternativen Ausführungsform der Anordnung des Decoders in einem stationär, z. B. in einem Steuergerät, angeordneten Decoder hat den Vorteil, dass die von dem Sensor ausgegebenen Signale nicht z. B. über die Schiene, entlang der sich das Element bewegt, übertragen werden müssen, sondern eine Auswertung des an oder in dem sich bewegenden Element erzeugten Sensorsignales direkt an oder in dem Element erfolgen kann. Jetzt ist lediglich eine Übertragung der ausgewerteten absoluten Position an eine stationäre Steuerung erforderlich, die jedoch aufgrund des einfacheren Signales in Bezug auf das Sensorausgangssignal auch einfacher übermittelt werden kann.

Das Codeband besteht vorzugsweise aus einem selbstklebenden Streifen. Hierdurch kann das erfindungsgemäße Messsystem in einer besonders einfachen Weise installiert oder bei bestehenden Systemen nachgerüstet werden. Das optische Abtastsystem kann hierfür vorzugsweise zusammen mit dem Decoder als Baueinheit an dem Element befestigt und über das Element mit Strom versorgt werden. Die von dem Decoder ausgegebenen Signale können dann z. B. moduliert auf der Stromleitung oder über eine zusätzliche Datenschiene an die stationäre Steuerung übermittelt werden und das ansonsten schwierig zu montierende und zu justierende Codeband kann einfach entlang der Schiene oder auf die Schiene aufgeklebt werden.

Nach der Erfindung erstreckt sich das Codeband vorzugsweise über die gesamte Länge der Schiene. Hierdurch sind nicht nur bestimmte Bereiche der Schiene, sondern der gesamte Verfahrweg des Elementes hinsichtlich ihrer absoluten Position erfassbar. Dabei ist es unerheblich, ob die Schiene gerade und/oder gebogen und/oder um Ecken verlegt ist.

In einer ersten erfindungsgemäßen Ausführungsform enthält das Codeband fortlaufende Zeichen oder Zeichenkombinationen. In dieser Ausführungsform ist eine durch das Codeband angezeigte absolute Position auch für Menschen ohne weitere Hilfsmittel leicht eindeutig identifizierbar. Weiter vorzugsweise wiederholen sich die Zeichen oder Zeichenkombinationen über die Länge des Codebandes nicht, damit von dem Codeband eine absolute Position eindeutig und ohne Auswertung mehrerer Zeichen oder Zeichenkombinationen angezeigt wird. Dieses bedeutet, dass die Zeichen oder Zeichenkombinationen nur einmal über die gesamte Länge der Schiene vorhanden sind.

Das erfindungsgemäße Messsystem kann als optisches Abtastsystem eine CCD-Kamera umfassen. Durch diese CCD-Kamera kann insbesondere eine in der zuvor beschriebenen ersten bevorzugten Ausführungsform auf dem Codeband fortlaufende Zeichenkombination leicht erfasst und durch eine entsprechende Verarbeitung ausgewertet werden. Hier ist es z. B. auch denkbar, dass das Codeband aus einem selbstklebenden Maßband besteht, das über eine Bilderfassung mittels der CCD-Kamera ausgewertet wird.

Erfindungsgemäß ist auf dem Codeband vorzugsweise wenigstens ein Justierstreifen vorgesehen. Durch einen solchen Justierstreifen können auf dem Codeband vorgesehene fortlaufende Zeichen oder Zeichenkombinationen oder andere die absolute Position anzeigende Elemente leichter identifiziert werden, da deren relative Position zu dem Justierstreifen bekannt ist. Durch das Vorsehen von wenigstens zwei Justierstreifen können auch absolute Abmessungen von auf dem Codeband vorhandenen Elementen ermittelt werden, da der Abstand der Justierstreifen bekannt ist.

In einer zweiten vorzugsweisen Ausführungsform der Erfindung weist das Codeband einen Binärcode auf, der weiter vorzugsweise ein Gray-Code ist. Der Binärcode ist vorzugsweise aus dunklen Streifen auf hellem Grund bzw. nicht reflektierenden Streifen auf reflektierendem Grund aufgebaut.

Vorteilig an einem solchen Code ist, dass sich pro fortschreitendem Positionswert z. B. nur 1 Bit ändern braucht und dass ein solcher Code in der automatisierten Auswertung allgemein einfacher und fehlerunanfälliger ist, als für Menschen ohne weitere Hilfsmittel leicht eindeutig identifizierbare Zeichen oder Zeichenkombinationen.

In dieser zweiten Ausführungsform der Erfindung besteht der Binärcode vorzugsweise aus einem Balken einer bestimmten Punktbreite, der weiter vorzugsweise zwischen zwei Justierstreifen angeordnet ist.

Weiter umfasst das optische Abtastsystem in dieser zweiten erfindungsgemäßen Ausführungsform vorzugsweise einen Zeilensensor und weiter vorzugsweise eine Beleuchtungsquelle zur Beleuchtung des Codebandes. Hierdurch kann erfindungsgemäß ein optischer Lowcost-Linearsensor verwendet werden, der pro Aufnahme z. B. einen senkrechten Balken mit z. B. 100 Pixeln einliest und diese Daten an einen Prozessor weitergibt, der daraus die Position ermittelt.

Eine Horizontalschiebewand nach der Erfindung mit mehreren sich entlang einer Schiene bewegenden Elementen weist ein erfindungsgemäßes Messsystem in oder an jedem Element auf. Ein erfindungsgemäßes Element einer Horizontalschiebewand mit mehreren sich entlang einer Schiene bewegenden Elementen weist ein Messsystem nach der Erfindung auf.

Weitere Einzelheiten, Merkmale und Vorteile der Erfindung ergeben sich aus der nachfolgenden Beschreibung eines bevorzugten Ausführungsbeispieles anhand der Zeichnungen.

Es zeigen:
- Figur 1:: Eine Aufsicht auf ein erfindungsgemäßes System, bei dem sich drei Elemente in unterschiedlichen Positionen auf einer Schiene befinden,
- Figur 2:: eine Prinzipdarstellung des erfindungsgemäßen Messsystemes, welches in ein erfindungsgemäßes Element integriert ist und
- Figur 3:: eine Prinzipdarstellung des erfindungsgemäßen Messsystemes, das einen Binärcode abtastet.

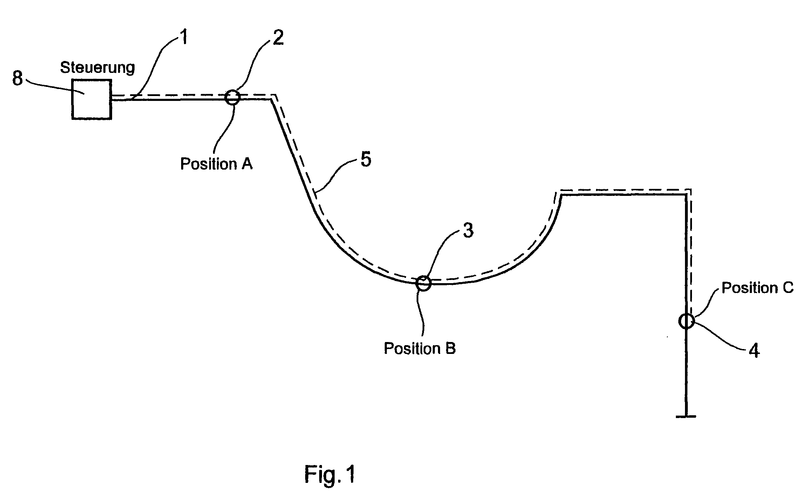

In Figur 1 ist eine Aufsicht eines beispielhaften Systemes einer Horizontalschiebewand mit drei Elementen prinzipiell dargestellt. Am Ende einer durch eine Schiene 1 definierten Laufstrecke, auf der ein erstes Element 2 in einer ersten Position A, ein zweites Element 3 in einer zweiten Position B und ein drittes Element 4 in einer dritten Position C angeordnet sind, befindet sich eine Steuerung 8. Neben der Schiene 1 ist parallel zu dieser ein Codeband 5 angeordnet, welches alle absoluten Positionen auf der Schiene 1, also auch der Elemente 2 - 4, in einem bestimmten Raster, z. B. in einem 10 mm-Raster, anzeigt. Die Steuerung 8 steuert die Elemente 2 - 4 auf Grundlage von Positionsinformation, die sie von den Elementen 2 - 4 übermittelt bekommt. Eine solche Übermittlung kann z. B. durch Modulation eines Positionssignales auf entlang der Laufstrecke, z. B. innerhalb der Schiene 1 verlaufende Stromleiter, oder über eine entlang der Laufstrecke verlaufende Datenschiene erfolgen. Alternativ kann die Positionsinformation auch drahtlos, d. h. optisch und/oder elektromagnetisch, d. h. über Funk, übermittelt werden.

Es ist auch möglich, dass die einzelnen Elemente 2 - 4 Teilaufgaben oder die vollständige Funktionalität der Steuerung 8 übernehmen.

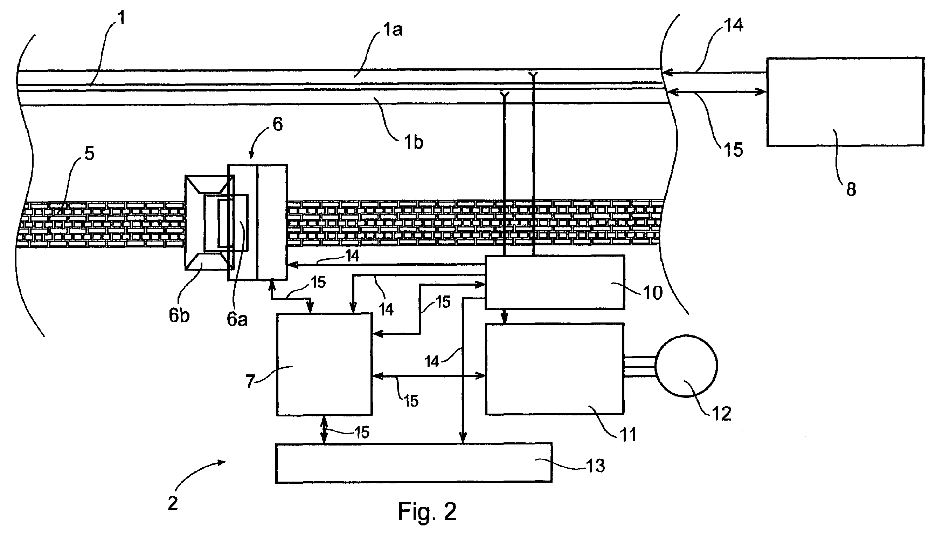

Die Figur 2 zeigt einen Teil des prinzipiell in Figur 1 dargestellten Systemes in einer schematischen vergrößerten Ansicht. Es ist zu erkennen, dass die Führungsschiene 1 nicht nur eine Trag- bzw. Führungsfunktion für die einzelnen Türelemente 2 - 4, sondern auch die Funktion von deren Stromversorgung über zwei Stromleiter 1a, 1b, übernimmt. Weiter erfolgt über diese Stromleiter 1 a, 1b auch eine Kommunikation zwischen den Türelementen 2 - 4 und der Steuerung 8. Hierfür wird von der Steuerung 8 zum einen eine Versorgungsspannung 14 in die beiden Stromleiter 1 a, 1b eingekoppelt und zum anderen werden über die Stromleiter 1a, 1b Daten 15 zwischen den Elementen 2 - 4 und der Steuerung 8 ausgetauscht. Es ist weiter zu erkennen, dass parallel zu der Schiene 1 ein Codeband 5 verläuft, welches von einem Abtastsystem 6 eines in seinen Funktionsblöcken schematisch dargestellten Elementes 2 abgetastet wird. Das Abtastsystem 6 besteht aus einer optischen Linse 6b und einem optischen Sensor 6a und ist zur Übertragung von Daten 15 mit einem Decoder 7 verbunden, der z. B. ein Signalprozessor zur Dekodierung der absoluten Position über fest codierte Muster oder fortlaufende Strichcode sein kann. Weiter empfängt das Abtastsystem 6 eine Versorgungsspannung 14 von einer Spannungsversorgungs-/Datenaustauscheinheit 10, die innerhalb des Elementes 2 angeordnet ist und mit den Stromleitern 1 a, 1 b der Schiene verbunden ist, um über diese an die von der Steuereinheit 8 gegebene Versorgungsspannung 14 angeschlossen zu werden und mit der Steuereinheit 8 Daten 15 auszutauschen. Der Decoder 7 erhält seine Versorgungsspannung 14 ebenfalls von dieser Spannungsversorgungs-/Datenaustauscheinheit 10, die ebenfalls eine Motorsteuerung 11 und Sonderfunktionseinheit(en) 13 mit Spannung versorgt. Der hier als Signalprozessor ausgebildete Decoder 7 ist zum Zwecke des Datenaustausches mit der Steuerung 8 weiter mit der Spannungsversorgungs-/Datenaustauscheinheit 10, zum Zwecke der Beeinflussung der Motorsteuerung zum Datenaustausch mit der Motorsteuerung 11 und zum Zwecke der Ansteuerung von Sonderfunktionseinheit(en) mit den Sonderfunktionseinheit(en) 13, verbunden. Die Motorsteuerung 11 ist weiter mit einem Motor 12 verbunden, welcher das Element 2 bewegt.

Über das optische Abtastsystem 6 wird das sich an der Laufstrecke befindliche Codeband 5 mit Hilfe des Decoders 7 entschlüsselt und damit die jeweilige Position des Elementes 2 eindeutig und zu jeder beliebigen Zeit ermittelt. Das Codeband 5 besteht vorzugsweise aus einem selbstklebenden Streifen, der fortlaufende Zeichen, wie Zahlen und/oder Buchstaben, enthält, und der auf der ganzen Länge der Verfahrstrecke angebracht ist. Die Zeichenkombinationen wiederholen sich vorzugsweise nicht. Diese Zeichen werden in einer ersten Ausführungsform während des Verfahrens eines Elementes, z. B. des Elementes 2, über z. B. eine CCD-Kamera aufgenommen, die den Sensor 6a des optischen Abtastsystemes 6 bilden kann, und innerhalb des den Decoder 7 bildenden digitalen Signalprozessors decodiert, d. h. es wird von dem digitalen Signalprozessor die Position des Elementes 2 bestimmt.

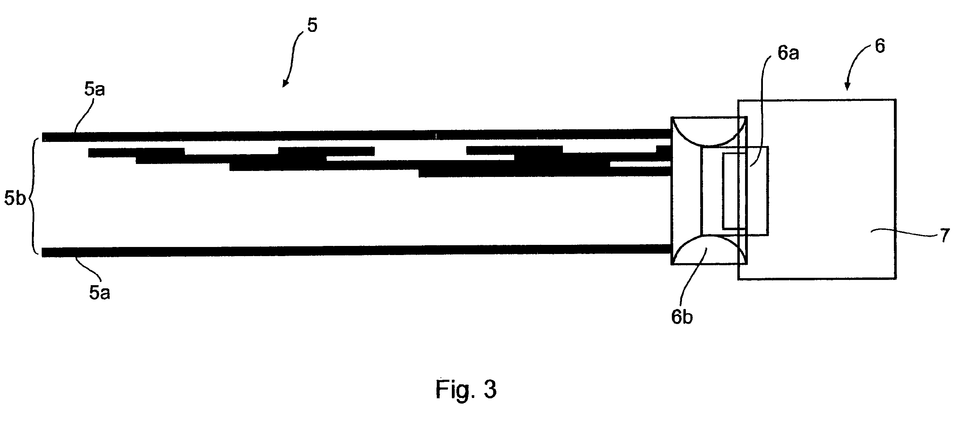

Die Figur 3 zeigt eine alternative Ausführungsform des Codebandes 5, für die als Sensor 6a ein Linearsensor verwendet werden kann, der als Binärcode 5b die ausgebildete Positionsinformation des Codebandes 5 abtastet. Hierbei kann die Linse 6b z. B. eine Plexiglasoptik sein, die das Code-Abbild auf der Sensorfläche zentriert und eine gewisse Fokussierung erreicht, die auch bei schwankendem Abstand des zumindest den Sensor 6a und die Linse 6b tragenden Lesekopfes zum Codeband 5 eine exakte Auswertung der Daten ermöglicht. Eine solche Kunststoff-Optik kann z. B. auf den Linearsensor 6a aufgeclipst werden. Weiter ist in dieser in Figur 3 gezeigten Ausführungsform der Decoder 7 direkt mit dem als Linearsensor ausgebildeten Sensor 6a verbunden.

Die in Figur 3 gezeigte zweite bevorzugte Ausführungsform gemäß der Erfindung ist in Bezug auf die zuvor beschriebene erste Ausführungsform, welche eine CCD-Kamera enthält, günstiger, da ein hierbei verwendbarer optischer Lowcost-Linearsensor, z. B. pro Aufnahme, einen senkrechten Balken mit z. B. 100 Pixeln einlesen und diese Daten seriell an einen als Decoder 7 wirkenden Prozessor weitergeben kann, der daraus die Position ermittelt.

Das Codeband besteht dafür aus einem Binärcode, der z. B. mit schwarzen Streifen auf weißem Grund aufgebaut ist. Als relativ fehlertolerant hat sich dabei der Gray-Code erwiesen, bei dem sich pro fortschreitendem Wert nur 1 Bit ändert. Mit einer ausreichenden Auflösung von z. B. 10 mm auf der Strecke und max. 40 m Schienenlänge reicht z. B. ein 12-Bit-Code aus. Es sind natürlich auch höhere Auflösungen und/oder größere Längen erzielbar, z. B. kann bei einer Auflösung von 10 mm und einem 14-Bit-Code eine Schienenlänge von 160 m erreicht werden.

Das Codeband 5 wird vorzugsweise mittels einem Paar (nicht gezeigter) IR-Dioden beleuchtet, damit jederzeit eine definierte Lichtmenge auf den Sensor reflektiert wird. Auf beiden Seiten des Codes, z. B. unter- und oberhalb des Codes, sind Justierstreifen 5a aufgebracht, deren Breite und Abstand eine genaue Lokalisierung der einzelnen Bits ermöglicht.

Die eingelesenen Datenworte werden von beiden Seiten her auf ihre Minimalwerte untersucht, um die Justierstreifen 5a zu finden. Hierdurch wird gleichzeitig der Abstand der Justierstreifen 5a als eingelesener Pixelwert erhalten und die restlichen erfassten Pixel können durch die Anzahl der zur Codierung verwendeten Bits (im Beispiel 12) geteilt werden, um die jeweils zu einem Bit zugehörigen Pixel zu ermitteln. Aus den Bit-Pixeln werden die 2 oder 4 mittleren gewichtet und daraus das entsprechende Bit entschlüsselt.

Das Positionswort wird z. B. über eine Datenschiene oder z. B. moduliert auf den Stromleitern 1 a, 1b an die Steuerung 8 übermittelt. Die Steuerung 8 kann jedem Element 2 - 4 eine anzufahrende Position mitteilen.

Die Elemente 2 - 4 können auch in eine gewünschte Position verfahren werden, die dann z. B. per Knopfdruck abgespeichert wird und von der Steuerung 8 als Sonderstellung immer wieder aufgebaut werden kann. Je nach dem Speicherplatz in der Steuerung 8 sind somit vielseitige Gestaltungsmöglichkeiten, ohne Änderung der Anlage, möglich. Es ist auch denkbar, die Eingabe neuer Stellungen zu ermöglichen, indem diese von Hand aufgebaut und über ein Bedientableau der Steuerung 8 als Sonderstellung abgespeichert werden.

Durch eine Dauerbestromung der Elemente während des Verfahrens sind vielseitig gestaltete Sonderelemente denkbar, die sich selbsttätig verriegeln, Werbeflächen aufleuchten lassen, eingebaute Jalousien betätigen usw. Diese Sonderelemente sind in Figur 2 als Sonderfunktionseinheit(en) 13 dargestellt.

### Bezugszeichenliste

- 1: Schiene
- 1a, 1b: Stromleiter
- 2: erstes Element
- 3: zweites Element
- 4: drittes Element
- 5: Codeband
- 5a: Justierstreifen
- 5b: Binärcode auf dem Codeband 5
- 6: Abtastsystem
- 6a: Sensor des Abtastsystemes
- 6b: Linse des Abtastsystemes
- 7: Decoder
- 8: Steuerung
- 10: Spannungsversorgungs-/Datenaustauscheinheit eines Elementes
- 11: Motorsteuerung eines Elementes
- 12: Motor eines Elementes
- 13: Sonderfunktionseinheit(en) eines Elementes
- 14: Versorgungsspannung
- 15: Daten

## Patentansprüche

1. Messsystem zur Bestimmung einer absoluten Position eines sich entlang einer Schiene (1) bewegenden Elementes (2, 3, 4), **gekennzeichnet durch** ein sich in oder an der Schiene (1) befindliches Codeband (5), ein in oder an dem Element (2, 3, 4) angeordnetes optisches Abtastsystem (6), welches das Codeband (5) abtastet, und einen Decoder (7), der auf Grundlage eines von dem optischen Abtastsystem (6) ausgegebenen Signales eine absolute Position des Elementes (2, 3, 4) bestimmt.

2. Messsystem nach Anspruch 1, **dadurch gekennzeichnet, dass** der Decoder (7) in oder an dem Element (2, 3, 4) angeordnet ist.

3. Messsystem nach Anspruch 1 oder 2, **dadurch gekennzeichnet, dass** das Codeband (5) aus einem selbstklebenden Streifen besteht.

4. Messsystem nach einem der vorstehenden Ansprüche, **dadurch gekennzeichnet, dass** sich das Codeband (5) über die gesamte Länge der Schiene (1) erstreckt.

5. Messsystem nach einem der vorstehenden Ansprüche, **dadurch gekennzeichnet, dass** auf dem Codeband (5) fortlaufende Zeichen oder Zeichenkombinationen enthalten sind.

6. Messsystem nach Anspruch 5, **dadurch gekennzeichnet, dass** sich die Zeichen oder Zeichenkombinationen über die Länge des Codebandes (5) nicht wiederholen.

7. Messsystem nach einem der vorstehenden Ansprüche, **dadurch gekennzeichnet, dass** das optische Abtastsystem (6) eine CCD-Kamera umfasst.

8. Messsystem nach einem der vorstehenden Ansprüche, **dadurch gekennzeichnet, dass** auf dem Codeband (5) wenigstens ein Justierstreifen vorgesehen ist.

9. Messsystem nach einem der vorstehenden Ansprüche, **dadurch gekennzeichnet, dass** das Codeband (5) einen Binärcode, vorzugsweise einen Gray-Code, aufweist.

10. Messsystem nach Anspruch 9, **dadurch gekennzeichnet, dass** der Binärcode aus einem Balken einer bestimmten Punktbreite besteht.

11. Messsystem nach einem der Ansprüche 9 oder 10, **dadurch gekennzeichnet, dass** das optische Abtastsystem (6) einen Zeilensensor umfasst.

12. Messsystem nach einem der Ansprüche 9 bis 11, **dadurch gekennzeichnet, dass** das optische Abtastsystem (6) wenigstens eine Beleuchtungsquelle zur Beleuchtung des Codebandes (5) umfasst.

13. Horizontalschiebewand mit mehreren sich entlang einer Schiene (1) bewegenden Elementen (2, 3, 4), **gekennzeichnet durch** ein Messsystem nach einem der Ansprüche 1 bis 12 in oder an jedem Element (2, 3, 4).

14. Element für eine Horizontalschiebewand mit mehreren sich entlang einer Schiene (1) bewegenden Elementen (2, 3, 4), **gekennzeichnet durch** ein Messsystem nach einem der Ansprüche 1 bis 12.
